# EUROPEAN PATENT SPECIFICATION

(11) **EP 1 829 733 B1**
(45) Date of publication and mention of the grant of the patent: **30.06.2010**
(21) Application number: 07103312.0
(22) Date of filing: 01.03.2007
(51) Int. Cl.: B60N 2/02, B60N 2/42

(54) **Vehicle seat, motor vehichle and airbag module**
Fahrzeugsitz, Kraftfahrzeug und Airbagmodul
Siège de véhicule, véhicule à moteur, et module d'airbag

(30) Priority: 02.03.2006 JP 2006056982; 02.03.2006 JP 2006056991
(43) Date of publication of application: 05.09.2007
(73) Proprietor: TAKATA CORPORATION, Minato-ku, Tokyo 106-8510 (JP)
(72) Inventor: Hiruta, Teruhiko, 106-8510 Tokyo (JP); Yoshikawa, Hiromichi, 106-8510 Tokyo (JP)
(74) Representative: Vossius & Partner

(56) References cited:
- EP-A- 1 623 887
- JP-A- 2005 126 051

## Description

The present invention relates to a vehicle seat, and more in detail, to a construction technology for a vehicle seat, on which an airbag module having a construction in which an airbag is developed and expanded from a downside to an upside of a seat cushion against movement of a vehicle occupant toward a front side of the motor vehicle in a seating condition of the vehicle occupant in a vehicle seat when an accident occurs, is mounted.

Hitherto, in a seat belt-wearing condition in which a seat belt is worn by a vehicle occupant seated in a vehicle seat, various technologies for blocking occurrence of a phenomenon, i.e., a so-called "submarine phenomenon", in which the vehicle occupant has a behavior to slip through a downside of a seat belt along a seat surface, along with a frontward movement of a waist portion of the vehicle occupant when an accident occurs, is proposed. For example, in JP-A-5-229378 (patent document 1), a vehicle seat having a construction in which an expanded airbag compresses a seat cushion from below so as to block the movement of the vehicle occupant toward a front side of the motor vehicle at the time of occurrence of the accident is disclosed. However, in designing such a kind of vehicle seat, there is a demand for a technology to construct a rational vehicle seat to be aimed at saving weight, and capable of securing strength corresponding to a load caused at a time that the airbag is activated.

Another known vehicle seat is shown in EP-A-1623887.

Accordingly, it is a problem in the present invention to provide a technology effective for securing strength while saving weight of a vehicle seat on which an airbag module having a construction in which an airbag is developed and expanded from a downside to an upside of a seat cushion against movement of a vehicle occupant in a seating condition in a vehicle seat toward a front side of the motor vehicle when an accident occurs, is mounted.

To solve the aforementioned problems, the present invention is constructed. Incidentally, the present invention can be applied to a construction technology for a vehicle seat mounted on various kinds of motor vehicles, such as automobile motor vehicles, trucks, buses, electric trains, boats and ships, and so fourth.

Claim 1 describes a vehicle seat according to the present invention. The vehicle seat according to Claim 1 is a vehicle seat mounted on a motor vehicle, and constructed to be provided with at least a left side frame, a right side frame, a bracket, a seat pan, an airbag module, and a together-fastening member.

The left side frame according to the present invention is configured to be a seat frame component extending in a front and back direction at a left side below a seat cushion in a seat frame forming a skeleton of a seat. The right side frame according to the present invention is configured to be a seat frame component extending in the front and back direction at a right side below the seat cushion in the seat frame forming the skeleton of the seat. A bracket according to the present invention is configured to be a seat frame component for connecting the left side frame and the right side frame below the seat cushion in the seat frame forming the skeleton of the seat. The bracket and the left side frame, and the bracket and the right side frame are typically, connected by welding, fastening with a bolt and a nut, or the like.

A seat pan according to the present invention is configured to have a construction being disposed between the left side frame and the right side frame below the seat cushion, and including an airbag module housing portion. The "seat pan" according to the present invention is defined as a member constituting a seat bottom surface of the vehicle seat, and specifically, can also be defined as a seat cushion panel, a seat cushion frame, or a seat cushion board receiving the seat cushion. With regard to a disposing configuration of the seat pan, it is sufficient that entire, or a part of the seat pan is disposed between the left side frame and the right side frame. A construction in which the seat pan is fixed to the left side frame and the right side frame by welding, fastening with a bolt and nut, or the like, in a manner so as to be hung across the side frames, or a construction in which the seat pan is fixed to a member situated between the left side frame and the right side frame by welding, fastening with a bolt and nut, or the like, can be adopted.

The airbag module according to the present invention has a construction to be set such that the airbag module includes an airbag, and is housed in the airbag module housing portion, and the airbag is developed and expanded from a downside to an upside of the seat cushion against movement of a vehicle occupant in a condition of being seated in a vehicle seat, toward a front side of a motor vehicle when an accident occurs. The airbag module typically is mainly constructed with the airbag being folded back in a predetermined folding configuration and housed, a gas-supplying portion generating airbag-expansion gas and supplying the gas into the airbag when the accident occurs, a retainer for housing the gas-supplying portion. The airbag module can sometimes be also called as an "airbag apparatus" or an "occupant restraining apparatus".

The together-fastening member according to the present invention is constructed to be a member for performing a together-fastening operation for the airbag module, the seat pan, and the bracket. Typically, the together-fastening operation is enabled by use of a fastening operation by a bolt and a nut, a swaging operation by a rivet, and so forth. Further, in the present invention, pressure caused at the time when the airbag is developed and expanded when the accident occurs, namely a load caused at the time when the airbag module is activated, is received by the seat pan and the bracket that are integrally formed by the together-fastening operation, by means of that the airbag module, the seat pan, and the bracket are fastened together and fixed by the together-fastening member.

According to the construction described above, since the strength of the seat pan can be raised by means of that a board thickness of the bracket that is fastened together and fixed to the seat pan is added to the board thickness of the seat pan, it is enabled to secure the strength required for the vehicle seat, upon suppressing the board thickness of the seat pan by this extent.
Therefore, in accordance with the invention according to Claim 1, strength can be secured while aiming at weight saving for the vehicle seat by means of a cooperative work of the seat pan and the bracket.

In the vehicle seat according to Claim 2, the airbag module according to Claim 1 at least includes an airbag, a gas-supplying portion, a retainer, and a fixing bolt. The gas-supplying portion in the present invention is provided with a function for generating airbag-expansion gas and supplying the gas into the airbag when the accident occurs. The gas-supplying portion is housed in the retainer according to the present invention. The fixing bolt according to the present invention constitutes the together-fastening member attached to the retainer. The fixing bolt may be formed in an integrally fixed manner with the retainer, or may be attached to the retainer in a condition of a separate body. Further, in the present invention, the retainer, the seat pan, and the bracket are fastened together and fixed by means of fastening force of the fixing bolt in a condition in which the fixing bolt at the retainer side is inserted into a through-hole that penetrates through the seat pan and the bracket.

According to the construction described above, since the strength of the seat pan can further be raised by means of that a board thickness of the bracket that is fastened together and fixed to the seat pan is added to the board thickness of the seat pan, it is enabled to secure the strength required for the vehicle seat, upon further suppressing the board thickness of the seat pan by this extent.
Therefore, in accordance with the invention according to Claim 2, strength can be secured while aiming at weight saving for the vehicle seat by means of a cooperative work of the retainer, the seat pan, and the bracket.

The vehicle seat according to Claim 3 is constructed such that in the construction according to Claim 2, an extending direction of the fixing bolt is approximately conformed to a developing direction of the airbag at the time when the airbag is developed and expanded. That is, when the accident occurs, the airbag is configured to be developed along an axial direction of the fixing bolt. According to such a construction described above, fastening force of the fixing bolt can effectively be used as the force opposing to the airbag's load at the time when the airbag is developed and expanded.

The motor vehicle according to Claim 4 at least includes a vehicle seat according to any one of Claims 1 through 3, and a seat belt for restraining the vehicle occupant seated in the vehicle seat. Further, in a seat belt wearing condition in which the seat belt is worn by the vehicle occupant seated in the vehicle seat, the construction is formed such that occurrence of a movement of the vehicle occupant to slip through a downside of a seat belt along a seat surface, along with a frontward movement of a waist portion of the vehicle occupant when an accident occurs, i.e., a so-called "submarine phenomenon" is blocked by means of the airbag module mounted on the vehicle seat.
Therefore, in accordance with the invention according to Claim 4, a motor vehicle capable of securing strength while being aimed at weight saving for the vehicle seat is provided.

As described above, according to the present invention, in a vehicle seat, on which an airbag module having a construction in which an airbag is developed and expanded from a downside to an upside of a seat cushion against a forward movement of a vehicle occupant in a seating condition in a vehicle seat toward a front side of a motor vehicle at a time of occurrence of an accident is mounted, it becomes enabled to secure the strength while aiming at weight saving for a vehicle seat, by constructing such that, specifically, the airbag module, a seat pan, and a bracket are fastened together and fixed, and pressure caused at a time when the airbag is developed and expanded when the accident occurs is received by the seat pan and the bracket that are integrally formed by being fastened together and fixed.

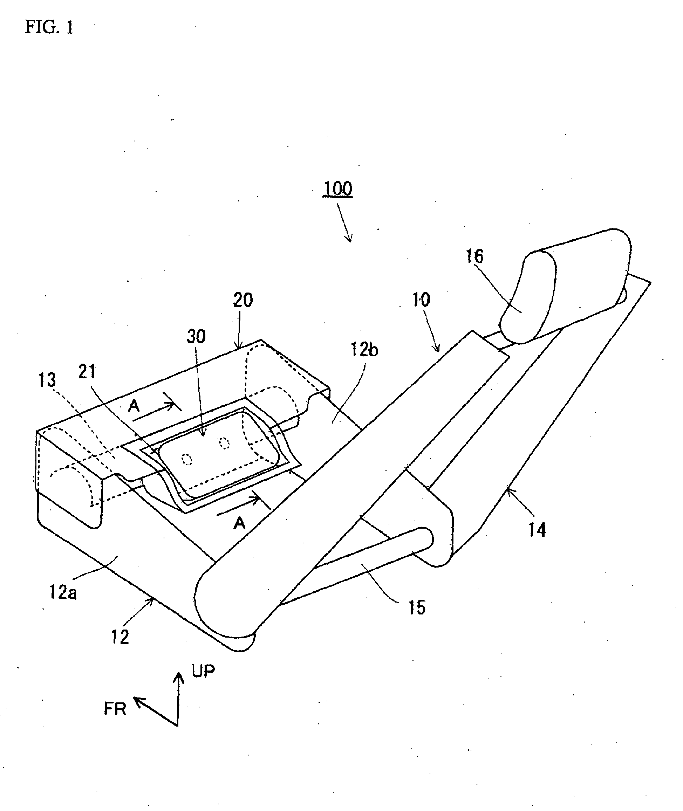

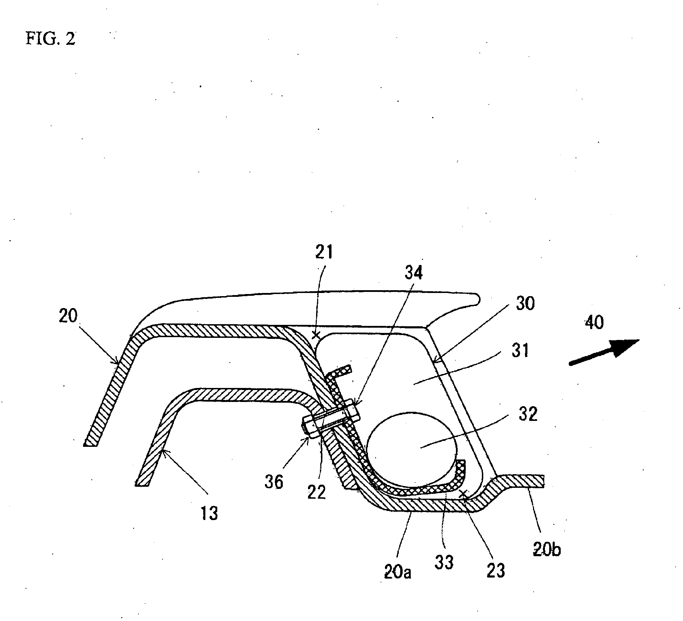

Hereinbelow, an embodiment of the present invention will be explained in detail referring to the drawings.
- Fig. 1: is a view showing an internal structure of a vehicle seat 100 in the present embodiment and is a perspective view looking from diagonal backside of the motor vehicle;
- Fig. 2: is a cross-section along a line A-A in Fig. 1;
- Fig. 3: is a perspective view schematically showing a work for housing an airbag module 30 into a housing portion 21 of a seat pan 20;
- Fig. 4: is a cross-section showing a process for attaching and fixing the airbag module 30 into the housing portion 21 of the seat pan 20;
- Fig. 5: is a cross-section showing a process for attaching and fixing the airbag module 30 into the housing portion 21 of the seat pan 20;
- Fig. 6: is a cross-section showing the process for attaching and fixing the airbag module 30 into the housing portion 21 of the seat pan 20;
- Fig. 7: is a perspective view showing a construction of a seat pan 120 and an airbag module 130 in another embodiment;
- Fig. 8: is a perspective view showing a construction of a seat pan 220 and an airbag module 230 in still another embodiment;
- Fig. 9: is a perspective view showing a construction of a seat pan 320 and an airbag module 330 in a further embodiment;
- Fig. 10: is a cross-section along a line B-B in Fig. 9; and
- Fig. 11: is a perspective view schematically showing a work for housing the airbag module 330 into the housing portion 21 of the seat pan 320.
Firstly, a construction of a vehicle seat 100 as an embodiment of a "vehicle seat" with respect to the present invention will be explained referring to Fig. 1 and Fig. 2. At this moment, Fig. 1 is a view showing an internal structure of the vehicle seat 100 according to the present embodiment, and is a perspective view looking from diagonal backside of the motor vehicle. Further, Fig. 2 is a cross-section at a line A-A in Fig. 1.

As shown in Fig. 1, the vehicle seat 100 according to the present embodiment is a vehicle seat to be mounted on a motor vehicle, and is mainly constructed of a seat frame 10, a seat pan 20, and an airbag module 30. The vehicle seat 100 is constructed to serve as a driver's seat where a driver is seated, or a passenger seat. Further, in the motor vehicle on which the vehicle seat 100 is mounted, a seatbelt (corresponds to a "seatbelt" in the present invention) to be worn by an occupant seated in the vehicle seat 100 is further mounted. Incidentally, a direction indicated by "FR" in Fig. 1 represents a front side of the motor vehicle, and that indicated by "UP" represents an upside of the motor vehicle.

The seat frame 10 is constructed to serve as a frame that forms a skeleton portion of the vehicle seat 100, and is at least provided with a base frame 12 and a back frame 14. The seat frame 10 corresponds to a "seat frame" in the present invention. On the base frame 12, a seat cushion (not shown) formed from a material having plasticity, such as a urethane material, or the like, is mounted, and the seat cushion constitutes a seat surface of the vehicle seat 100. Further, on the back frame 14, a seat back (not shown) formed from a material having plasticity, such as a urethane material, or the like, is mounted, and the seat back constitutes a back surface of the vehicle seat 100. Furthermore, an outer surface of each of the seat cushion and the back seat is covered with scurf skin (not shown) formed from leather, cloth, or the like.

The base frame 12 is a frame to be disposed below the seat cushion, and is provided with a left-and-right pair of side frames, 12a and 12b (a left side frame 12a, and a right side frame 12b), extending in a front and back direction of the vehicle seat 100 (conforming to a front and back direction of the motor vehicle). The left side frame 12a mentioned here corresponds to a "left side frame" in the present invention, and the right side frame 12b corresponds to a "right side frame" in the present invention.
Further, at an upper portion side of the base frame 12, a bracket 13 for reinforcement is provided so as to hang across the left and right side frames, 12a and 12b. The bracket 13 is constructed to be a plate shape (a curved plate shape in Fig. 1) having a predetermined board thickness, and is connected to the left and right side frames, 12a and 12b, by means of a welding process, a fastening process with a bolt and a nut, or the like. This bracket 13 serves as a supporting member for supporting the seat pan 20, and is constructed to serve as a holding member for connecting and holding the left and right side frames, 12a and 12b. In addition, the bracket 13 also serves as a positioning member when joining the left and right side frames, 12a and 12b, resulting in providing a good assembling capability. This bracket 13 corresponds to a "bracket" in the present invention.

The back frame 14 is a frame that is rotatably connected to the base frame 12 via a supporting shaft 15 and a reclining device (not shown). At an upper part of the back frame 14, a head rest 16 is attached to a position corresponding to a head portion of a vehicle occupant.

The seat pan 20 is provided so as to hang across the left-and-right pair of the side frames, 12a and 12b in a manner so as to cover the same from above, at a portion above the bracket 13 and below the seat cushion. The seat pan 20 is a member constituting a seat bottom surface of the vehicle seat 100, and specifically, can also be defined as a seat cushion panel that receives the seat cushion, a seat cushion frame, or a seat cushion board. Although described later in detail, the seat pan 20 is attached to the bracket 13 by means of the fastening process with the bolt and nut at two places. The seat pan 20 can also be joined to the left and right side frames, 12a and 12b, by means of the welding process or the fastening process with the bolt and nut. The seat pan 20 has a function to receive a load from the seat cushion. The seat pan 20 corresponds to a "seat pan" in the present invention.
Further, in the seat pan 20, a housing portion 21 for housing the airbag module 30 is provided. The housing portion 21 corresponds to an "airbag module housing portion" in the present invention. In the present embodiment, the housing portion 21 is constructed to have a hollow portion 23 (sometimes called as "concave portion", "cavity portion", or "concave area") that is downwardly hollowed. The hollow portion 23 is configured to be a portion where the airbag module 30 can be held by the hollow portion 23.

As shown in Fig. 2, the housing portion 21 is provided with a first extension portion 20a constituting a bottom surface of the hollow portion 23, and a second extension portion 20b extending to a rear side (right side in Fig. 2) in relation to the first extension portion 20a. A step portion (step shape) is formed by means of a difference of elevation in an upper and lower direction between the first extension portion 20a and the second extension portion 20b. In concrete terms, the construction is made such that the first extension portion 20a is extending at a portion lower than the second extension portion 20b. Further, the housing portion 21 is opened diagonally upward toward the backside. Accordingly, a developing direction (sometimes called "protruding direction") of an airbag (airbag 31 described later) of the airbag module 30 is configured to be a diagonally upward and backward direction, as a direction indicated by an arrow 40 in Fig. 2. Although described later in detail, according to a present construction, a work for housing the airbag module 30 in the housing portion 21, and a work for attaching and fixing the airbag module 30 to a seat pan 20 side is aimed at facilitating by means of a holding function (or a positioning function) of the airbag module 30 provided by the hollow portion 23 that is caved downward.

Further, according to the present construction, when the airbag module 30 is held at a proper position in the hollow portion 23, the airbag module 30 in the held condition is configured to be positioned at a front side in relation to the step portion between the first extension portion 20a and the second extension portion 20b. Accordingly, a protrusion of the airbag module 30 toward a second extension portion 20b side can be discriminated on the basis of a result of a visible confirmation between a first condition in which the airbag module 30 held by the hollow portion 23 covers the step portion and a second condition in which the covering operation is released. That is, a case, in which an entire step portion or a part of the step portion cannot be visibly confirmed, represents the first condition in which the airbag module 30 covers the step portion, and this results in that a rear end surface of the airbag module 30 is discriminated to be protruded out to the second extension portion 20b side across the step portion. At this moment, the airbag module 30 can be judged not to be located at a proper position. On the other hand, a case, in which the entire step portion can be visibly confirmed, represents the second condition in which the airbag module 30 does not cover the step portion, and this results in that the rear end surface of the airbag module 30 is discriminated not to be protruded out to the second extension portion 20b side across the step portion. At this moment, the airbag module 30 can be judged to be located at the proper position. By discriminating the protrusion of the airbag module 30 toward the second extension portion 20b side, it becomes to be enabled to prevent the airbag module 30 from being pinched by an airbag cover that covers the housing portion 21. With regard to visibility of the step portion, the visibility of the step portion can be aimed at being further improved by forming a colored line at the step portion.

Incidentally, the housing portion 21 of the seat pan 20 in the present embodiment has a construction including a hollow portion 23 that is caved downward. Therefore, the airbag module 30 in the housed condition (non-operating time) is aimed at being protected. Further, an airbag cover (not shown) that covers the housing portion 21 in a condition, in which the airbag module 30 is housed therein, is mounted on the seat pan 20, and protection for the airbag module 30 in the condition being housed by the airbag cover is aimed at being further improved.

As shown in Fig. 2, the airbag module 30 at least includes an airbag 31, a gas generator (sometimes called as, inflator) 32, and a retainer 33. The airbag module 30 corresponds to an "airbag module" in the present invention.

The airbag 31 is constructed as an airbag element that is folded back in a predetermined folding configuration and housed, and that is developed and expanded by gas generated by the gas generator 32 and supplied to the airbag element when an accident occurs. In concrete terms, the airbag 31 is developed and expanded from a downside to an upside of a seat cushion against movement of a vehicle occupant toward a front side of the motor vehicle in a seating condition of the vehicle occupant in a vehicle seat when the accident occurs. Thereby, in a seatbelt-wearing condition in which a seatbelt is worn by a vehicle occupant seated in a vehicle seat 100, a phenomenon, i.e., a so-called submarine phenomenon, in which the vehicle occupant has a behavior to slip through a downside of a seatbelt along a seat surface, along with a frontward movement of a waist portion of the vehicle occupant when the accident occurs, is blocked or suppressed. The airbag 31 mentioned here corresponds to an "airbag" in the present invention, and a "gas-supplying portion" in the present invention is constructed by the gas generator 32.

The retainer 33 is constructed to serve as a member for housing the gas generator 32. The retainer 33 corresponds to a "retainer" in the present invention. A fixing bolt 34 for attaching and fixing the airbag module 30 to the base frame 12 side is provided in the retainer 33. The airbag module 30 is attached and fixed to the base frame 12 side by means of the fixing bolt 34. In concrete terms, the fixing bolt 34 is configured to be able to be inserted into a through-hole 22 penetrating through the seat pan 20 and the bracket 13 in a condition in which the airbag module 30 is housed in the housing portion 21 of the seat pan 20. Accordingly, three members of the retainer 33, the seat pan 20, and the bracket 13 are integrally formed by being fixed to each other by being fastened together (sometimes called as "fixing by together-fastening") by fastening (screwing) the fixing bolt 34 penetrated through the through-hole 22, and the nut 36 with each other. In this case, the nut 36 may be constructed as a separate body from the bracket 13, or may have a construction in which the nut 36 is integrally jointed with the bracket 13. Further, a shape of a round hole, a long hole, a slit, or the like can appropriately be selected as the through-hole 22. The fixing bolt 34 mentioned here corresponds to a "together-fastening member" and a "fixing bolt" in the present invention.

Incidentally, the present embodiment is constructed such that an extending direction of a bolt axis of the fixing bolt 34 is approximately conformed to a developing direction of the airbag 31 along a direction indicated by an arrow 40 in Fig. 2. According to such a construction, it is enabled that fastening force of the fixing bolt 34 is effectively used as force against an airbag load when the airbag is developed and expanded.

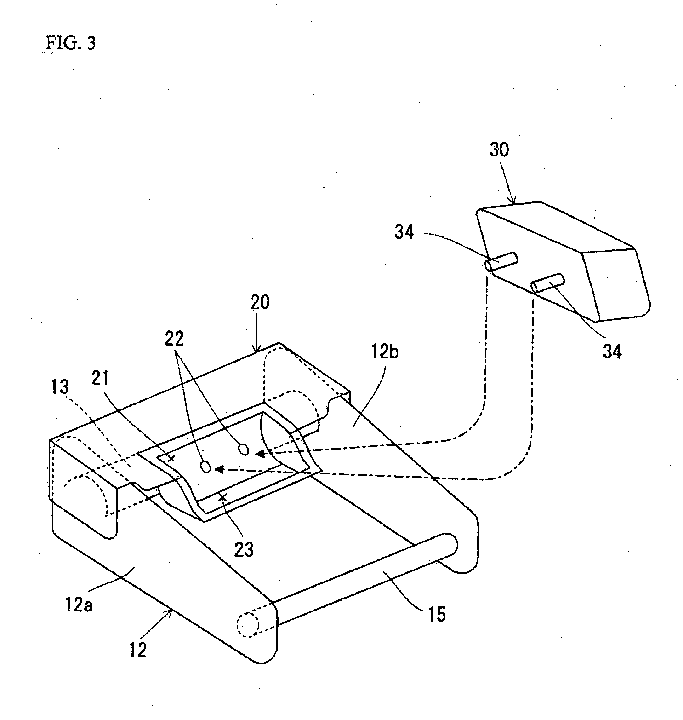

A work for housing the airbag module 30 in the present embodiment in the housing portion 21 of the seat pan 20, and a work for attaching and fixing the airbag module 30 to the seat pan 20 side will be explained referring to Figs. 3 through 6.

Fig. 3 is a perspective view schematically showing the work for housing the airbag module 30 into the housing portion 21 of the seat pan 20. As shown in Fig. 3, in the housing work for the airbag module 30, firstly, the airbag module 30 is moved to the housing portion 21 in a manner so as for the fixing bolt 34 at an airbag module 30 side to be headed to the housing portion 21 of the seat pan 20.

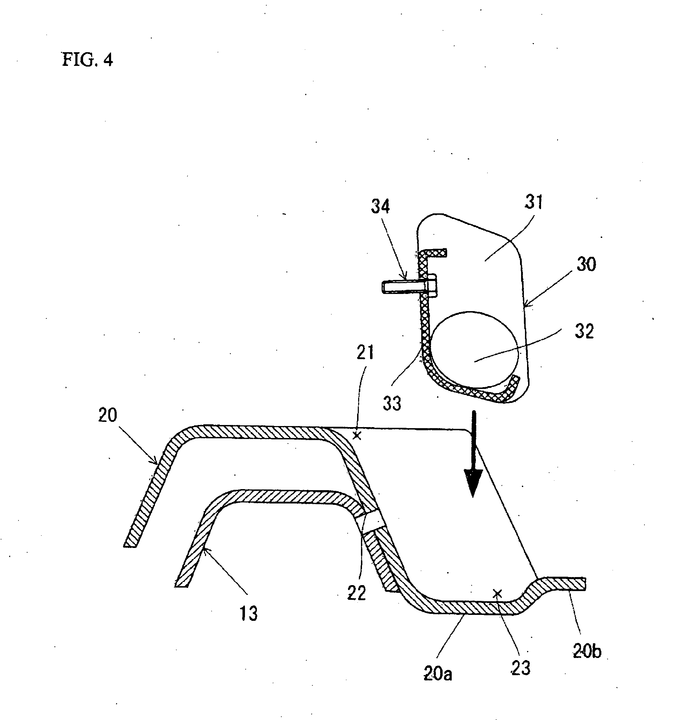

Continuously, with regard to the work until the airbag module 30 is attached and fixed to the seat pan 20 side, the same can be performed by at least using, for example, three steps shown in Fig. 4 through Fig. 6. At this moment, any of Fig. 4 through Fig. 6 is a cross-section showing a process for attaching and fixing the airbag module 30 to the housing portion 21 of the seat pan 20.

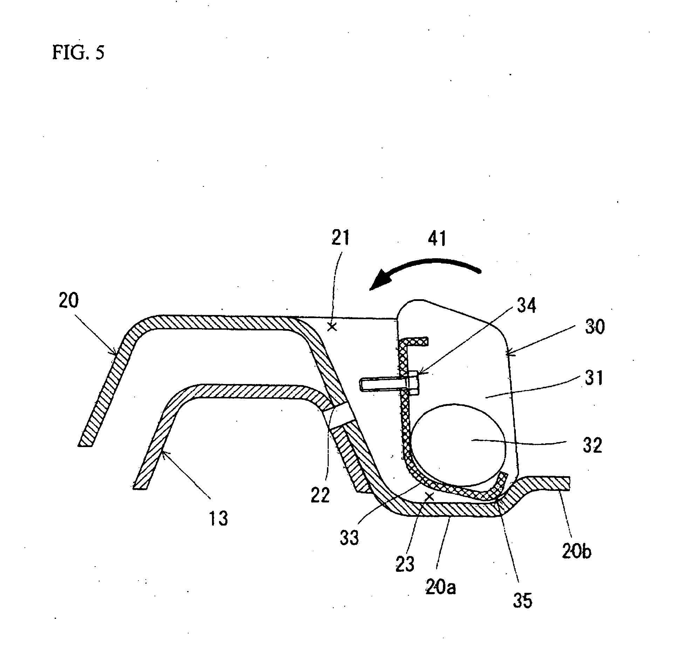

As shown in Fig. 4, in the first step, the airbag module 30 is inserted toward the hollow portion 23 (the first extension portion 20a) from above the seat pan 20, in a condition of being headed so as for a gas generator 32 side to be situated at a downside. At this time, the airbag module 30 can be easily introduced into the hollow portion 23 along a concaved shape of the hollow portion 23. Thus, a provisionally held condition of the airbag module 30 shown in Fig. 5 is formed. At this moment, the bolt axis of the fixing bolt 34 is extended approximately in a left-and-right direction.

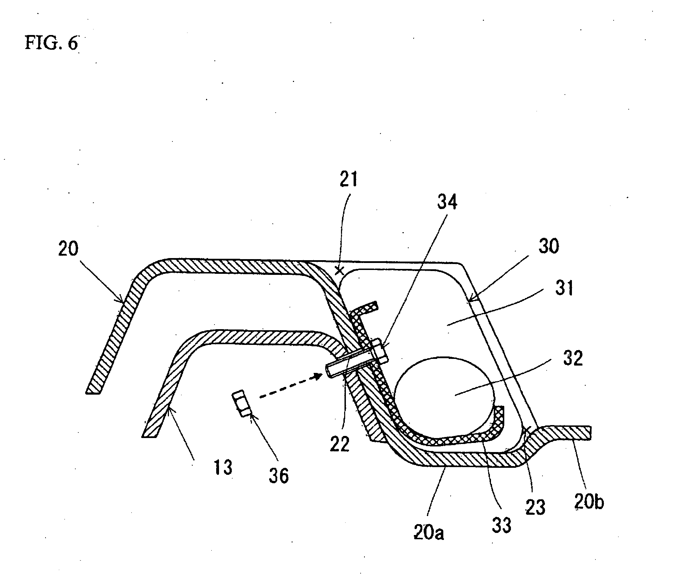

Next, as shown in Fig. 5, in the second step, the airbag module 30 is rotated in a direction indicated by an arrow 41 in Fig. 5 around the step portion as a pivot fulcrum, in a condition in which a module lower portion 35 of the airbag module 30 in a provisionally held condition is in contact with the step portion between the first extension portion 20a and the second extension portion 20b. Further, the fixing bole 34 is caused to be in close contact with the through-hole 22 by the rotation. Thereby, an inserting condition where the fixing bolt 34 is inserted into the through-hole 22 is formed, as shown in Fig. 6. In consideration of ease of insertion for the fixing bolt 34, it is preferable to use an elongate hole extending in an upper and lower direction, as the through-hole 22.

At the last, as shown in Fig. 6, in the third step, by fastening the fixing bolt 34 and the nut 36 with each other, an integrally formed condition (the condition shown in Fig. 2) where the retainer 33, the seat pan 20, and the bracket 13 are fastened and fixed to each other, is formed. At this moment, the airbag module 30, the seat pan 20 and the bracket 13 are fastened together and fixed by the fixing bolt 34, whereby pressure caused at the time when the airbag 31 is developed and expanded when the accident occurs, namely a load generated when the airbag module 30 is operated is to be received by the seat pan 20 and the bracket 13 that are integrally formed by being fastened and fixed together.

At this moment, since strength of the seat pan 20 can be raised by means of that a board thickness of the bracket 13 that is fastened and fixed together to the seat pan 20 is added to a board thickness of the seat pan 20, it is enabled that the strength required for the vehicle seat 100 is secured, upon suppressing the board thickness of the seat pan 20 in this extent. That is, the strength of the vehicle seat 100 can be secured while aiming at weight saving for the vehicle seat 100 by means of a cooperative work among the retainer 33, the seat pan 20, and the bracket 13. Incidentally, in a case that a specification, in which the board thickness of the seat pan 20 is suppressed, is considered, with regard to a board thickness, d1, of the seat pan 20, and a board thickness, d2, of the bracket 13, it is preferable to set the same on the basis of a relationship expressed by an inequality, d1 ≤ d2.

Further, occurrence of an abnormal noise due to contact or the like of the seat pan 20 and the bracket 13 can be prevented by fastening and fixing together, and seating comfortableness of the vehicle seat 100 can be improved by raising the strength of the seat pan 20.

Furthermore, since the seat pan 20 is constructed to be fixed to the bracket 13 by together fastening and fixing, and the seat pan 20 is not required to be fixed to the left side frame 12a and the right side frame 12b by welding or the like, a manufacturing process of the vehicle seat 100 can be simplified.

By performing the aforementioned first to the third steps in the order, the work for attaching and fixing the airbag module 30 to the seat pan 20 side is facilitated. Specifically, in the second and third steps, the module lower portion 35 of the airbag module 30 held by the hollow portion 23 is caused to come into contact with the step portion between the first extension portion 20a and the second extension portion 20b from beginning to end during the time until the airbag module 30 is fastened to the seat pan 20 side by means of the fixing bolt 34. Since the airbag module 30 is thereby positioned, it is enabled to aim at improving an assembling capability of the airbag module 30.

### (Another Embodiment)

Incidentally, the present invention is not limited to the aforementioned embodiment, and various applications and modifications are considered. For example, the following each embodiment, to which the aforementioned embodiment is applied, can be performed.

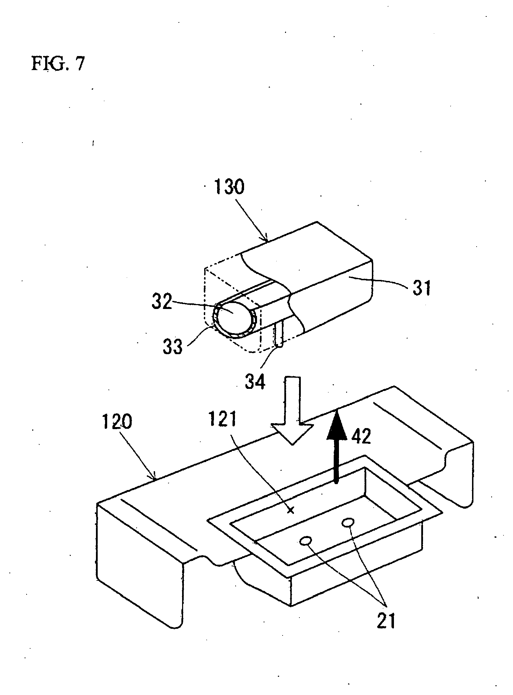

In the seat pan 20 in the aforementioned embodiment, although the case that the housing portion 21 that houses the airbag module 30 is opened diagonally upward toward the backside is described, the construction of the seat pan in the present invention can appropriately be changed as needed. For example, each embodiment shown in Fig. 7 through Fig. 9 can also be adopted.

Fig. 7 is a perspective view showing a construction of a seat pan 120 and an airbag module 130 in another embodiment.
In the seat pan 120 in the embodiment shown in Fig. 7, a housing portion 121 that houses the airbag module 130 is constructed to open upward. In the airbag module 130 housed in the housing portion 121, the fixing bolt 34 is attached to a lower portion of the retainer 33. Accordingly, the airbag module 130 is inserted from above the housing portion 121 in a condition in which the fixing bolt 34 is facing downward, and the fixing bolt 34 is inserted into the through-hole 22 and fastened. Thereby, the airbag module 130 is attached to a seat pan 120 side and fixed thereto. In the airbag module 130, a developing direction of the airbag 31 that is developed and expanded when the accident occurs is an upside of the motor vehicle as shown by an arrow 42 in Fig. 7, and this direction is approximately conformed to an extending direction of the bolt axis of the fixing bolt 34.

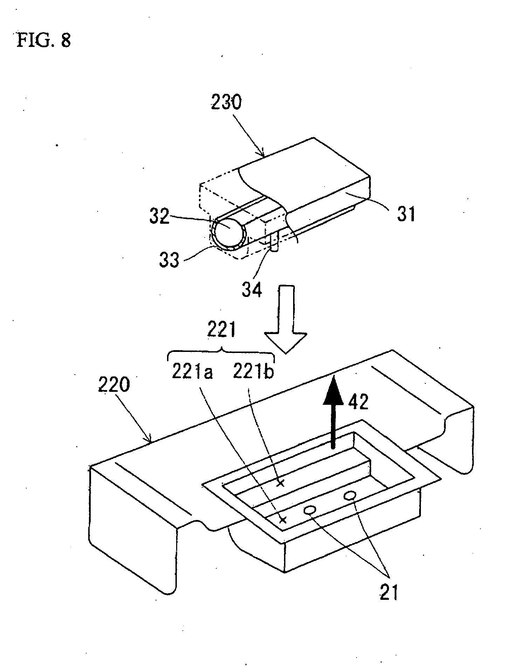

Further, Fig. 8 is a perspective view showing a construction of a seat pan 220 and an airbag module 230 in still another embodiment.
In the seat pan 220 in the embodiment shown in Fig. 8, a housing portion 221 that houses the airbag module 230 is constructed to open upward. The housing portion 221 is configured to have a stepped structure where a difference of elevation is applied to, in relation to an upper and lower direction, and a position that is relatively deep in depth is configured to be a first housing area 221a for housing the retainer 33, and a position relatively shallow in depth is configured to be a second housing area 221b for housing the portion of the airbag 31 situated above the retainer 33 in relation to the retainer 33. In the airbag module 230 housed in the housing portion 221, the fixing bolt 34 is attached to the lower portion of the retainer 33. Accordingly, the airbag module 230 is inserted from above the housing portion 221 in the condition in which the fixing bolt 34 is facing downward, and the fixing bolt 34 is inserted into the through-hole 22 and fastened. Thereby, the airbag module 230 is attached to a seat pan 220 side and fixed thereto. In the airbag module 230, a developing direction of the airbag 31 that is developed and expanded when the accident occurs is an upside of the motor vehicle as shown by an arrow 42 in Fig. 8, and this direction is approximately conformed to an extending direction of the bolt axis of the fixing bolt 34.

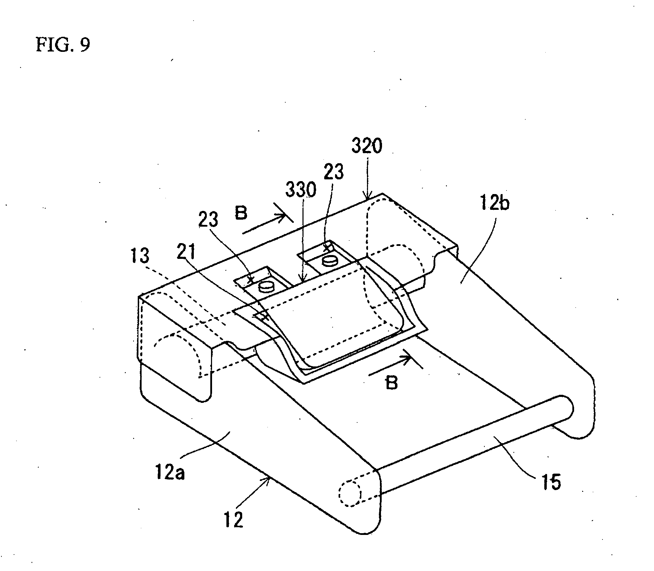

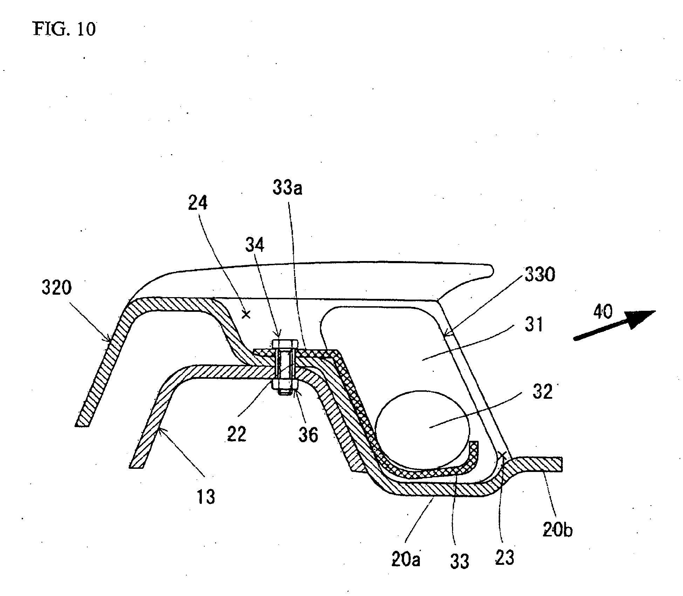

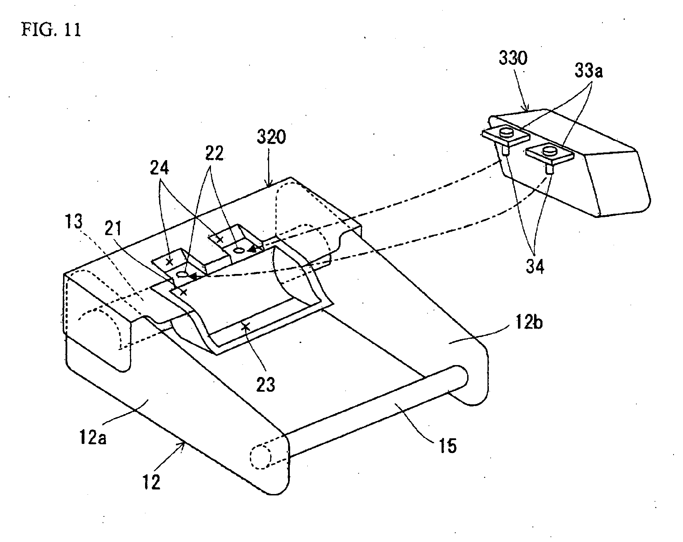

Furthermore, Fig. 9 is a perspective view showing a construction of a seat pan 320 and an airbag module 330 in a further embodiment, and Fig. 10 is a cross-section along a line B-B in Fig. 9.
The seat pan 320 in the embodiment shown in Fig. 9 is provided with the housing portion 21 similar to that in the seat pan 20, and the seat pan 320 is constructed to be further provided with a left-and-right pair of housing portions, 24 and 24. On the other hand, as shown in Figs. 10 and 11, in the airbag module 330 that is housed in the housing portion 21, a left-and-right pair of brackets for bolt, 33a and 33a, is provided in the retainer 33. Each bracket for bolt 33a is fastened together and fixed to the seat pan 320 and the bracket 13 by means of the fixing bolt 34 and the nut 36 in a condition of being housed in each housing portion 24. In the airbag module 330, a developing direction of the airbag 31 that is developed and expanded when the accident occurs is configured to be a diagonally upward toward the backside direction as shown by an arrow 40 in Fig. 10, similar to that of a case of the airbag module 30.

At this moment, Fig. 11 is a perspective view schematically showing a work for housing the airbag module 330 into the housing portion 21 of the seat pan 320. As shown in Fig. 11, in the housing work for housing the airbag module 330, firstly, the airbag module 330 is moved to the housing portion 21 in a manner so as for the fixing bolt 34 at the airbag module 330 side to be headed toward the housing portion 24 of the seat pan 320. Then, after inserting the fixing bolt 34 into the through-hole 22 that penetrates the seat pan 320 and the bracket 13, the fixing bolt 34 and the nut 36 are fastened to each other. Thereby, a condition, in which the retainer 33, the seat pan 320, and the bracket 13 are fastened together and fixed, is formed.

Further, in the aforementioned embodiment, although the bracket 13 constructed to be a plate shape having a predetermined board thickness (curved plate shape in Fig. 1) is described, a structure of a member corresponding to the bracket 13 is not limited thereto, and is able to be changed into various types of the bracket as needed. In concrete terms, a construction member in which a through-hole for together-fastening is formed in a member, in which a cylindrically formed pipe-shaped member is pressed into a flat plate shape, a construction member in which a through-hole for together-fastening is formed in a plate-shaped member hung across a plurality of pipe-shaped member, a construction member in which a through-hole for together-fastening is formed in a member that is squeezed into a box-shape, or formed into a box-shape by bending processing, and so forth can also be used as a substitute member for the bracket 13.

Further, in the aforementioned embodiment, a case that the developing direction of the airbag at a time when the airbag is developed and expanded is approximately conformed to the extending direction of the fixing bolt is described. In the present invention, however, the construction may be formed such that the developing direction of the airbag and the extending direction of the fixing bolt intersect.

Moreover, in the aforementioned embodiment, although a construction of the vehicle seat 100 that is constructed as a driver's seat in which a driver is seated, or a passenger seat is explained, the characteristic part of the present invention can also be applied to a construction of various types of vehicle seats including the driver's seat or a passenger seat, for example, a rear seat. In the motor vehicle in this case, various types of motor vehicles moving with vehicle occupants taken on, such as automobiles, airplanes, boats and ships, electric trains, buses, trucks, and so forth are included.

## Claims

1. A vehicle seat mounted on a motor vehicle comprising:
a left side frame (12a) of a seat frame (10) forming a skeleton of the seat (100), extending in a front and back direction at a left side below a seat cushion;
a right side frame (12b) of the seat frame, extending in the front and back direction at a right side below the seat cushion;
a bracket (13) connecting the left side frame and the right side frame below the seat cushion;
a seat pan (20;120;220;320) disposed below the seat cushion between the left side frame and the right side frame, and including an airbag module housing portion (21;121;221);
an airbag module (30;130;230;330) including an airbag (31), housed in the airbag housing portion, and set to be such that the airbag is developed and expanded from a downside to an upside of a seat cushion against forward movement of a vehicle occupant seated in the vehicle seat toward a front side of a motor vehicle when an accident occurs; and
a together-fastening member (34) for fastening the airbag module, the seat pan and the bracket together,
wherein the airbag module, the seat pan and the bracket are fastened together by the together-fastening member, whereby pressure caused at a time when the airbag is developed and expanded when the accident occurs is received by the seat pan and the bracket which are integrated by the together-fastening operation.

2. The vehicle seat according to Claim 1, wherein the airbag module includes the airbag, a gas-supplying portion (32) for generating airbag-expansion gas and supplying the gas into the airbag when the accident occurs, a retainer for (33) housing the gas-supplying portion, and a fixing bolt (34) constituting the together-fastening member attached to the retainer, wherein the retainer, the seat pan, and the bracket are fastened together by fastening force of the fixing bolt in a condition of that the fixing bolt at a retainer side is inserted into a through-hole penetrating the seat pan and the bracket.

3. The vehicle seat according to Claim 2 constructed such that a developing direction of the airbag at the time when the airbag is developed and expanded is approximately conformed to an extending direction of the fixing bolt.

4. A motor vehicle comprising:
the vehicle seat (100) according to any one of Claims 1 through 3; and
a seat belt for restraining the vehicle occupant seated in the vehicle seat,
wherein the airbag module mounted on the vehicle seat blocks a movement of the vehicle occupant to slip through a downside of the seat belt along a seat surface, along with a frontward movement of a waist portion of the vehicle occupant when an accident occurs, in a seat belt wearing condition wherein the seat belt is worn by the vehicle occupant seated in the vehicle seat.

## Patentansprüche

1. Fahrzeugsitz für ein Kraftfahrzeug mit:
einem linken Rahmen (12a) eines ein Gerüst für einen Sitz (100) bildenden Sitzrahmens (10), welcher sich in Vorwärts-/Rückwärtsrichtung links unterhalb des Sitzpolsters erstreckt;
einem rechten Rahmen (12b) des Sitzrahmens, welcher sich in Vorwärts-/Rückwärtsrichtung rechts unterhalb des Sitzpolsters erstreckt;
einem Bügel (13) zum Verbinden des linken und des rechten Rahmens unterhalb des Sitzpolsters;
einer Sitzschale (20; 120; 220; 320), die unterhalb des Sitzpolsters zwischen dem linken und dem rechten Rahmen vorgesehen ist und ein Airbagmodul-Gehäuseteil (21; 121; 221) aufweist;
einem Airbagmodul (30; 130; 230; 330) mit einem im Airbag-Gehäuseteil untergebrachten Airbag (31), wobei das Airbagmodul so angeordnet ist, dass es sich von einer unteren Seite zu einer oberen Seite eines Sitzpolsters hin entgegen einer bei einem Unfall auftretenden Vorwärtsbewegung zur Frontseite des Fahrzeugs eines auf dem Fahrzeugsitz sitzenden Fahrzeuginsassen entfaltet und expandiert; und
einem Sammel-Befestigungselement (34) zum Befestigen des Airbagmoduls, der Sitzschale und des Bügels,
wobei das Airbagmodul, die Sitzschale und der Bügel mittels des Sammel-Befestigungselements so miteinander befestigt sind, dass ein sich bei einem Unfall zum Zeitpunkt des Entfaltens und Expandierens des Airbags entwickelnder Druck von der Sitzschale und vom Bügel, welche durch die gemeinsame Befestigung zusammengeschlossen sind, aufgenommen wird.

2. Fahrzeugsitz nach Anspruch 1, wobei das Airbagmodul einen Airbag, einen Gaszufuhr-Abschnitt (32) zum Erzeugen von Gas zur Airbag-Expansion und Einspeisen des Gases in den Airbag bei einem Unfall, eine Halterung (33) zum Unterbringen des Gaszufuhr-Abschnitts, und eine Befestigungsschraube (34) aufweist, die das an der Halterung angebrachte Sammel-Befestigungselement bildet, wobei die Halterung, die Sitzschale und der Bügel gemeinsam mittels einer durch die Befestigungsschraube aufgebrachten Befestigungskraft befestigt werden, wenn die Befestigungsschraube von der Seite der Halterung aus in ein in der Sitzschale und im Bügel vorgesehenes Durchgangsloch eingesetzt ist.

3. Fahrzeugsitz nach Anspruch 2, wobei die Ausbreitungsrichtung des Airbags zum Zeitpunkt des Entfaltens und Expandierens des Airbags etwa der Erstreckungsrichtung der Befestigungsschraube entspricht.

4. Kraftfahrzeug mit:
einem Fahrzeugsitz (100) nach einem der Ansprüche 1 bis 3; und
einem Sitzgurt zum Schutz des auf dem Fahrzeugsitz sitzenden Fahrzeuginsassen,
wobei das am Fahrzeugsitz befestigte Airbagmodul bei einem Unfall eine Bewegung des Fahrzeuginsassen, bei der dieser zugleich mit einer Vorwärtsbewegung des Hüftbereiches des Fahrzeuginsassen unter dem Sitzgurt hindurch entlang der Sitzfläche rutscht, bei angelegtem Sitzgurt verhindert, wobei der auf dem Fahrzeugsitz sitzende Fahrzeuginsasse den Sitzgurt angelegt hat.

## Revendications

1. Siège de véhicule monté sur un véhicule à moteur comprenant :
un châssis latéral gauche (12a) d'un châssis de siège (10) formant un squelette du siège (100), s'étendant dans une direction avant et arrière au niveau d'un côté gauche sous un coussin de siège ;
un châssis latéral droit (12b) d'un châssis de siège, s'étendant dans la direction avant et arrière au niveau d'un côté droit sous le coussin de siège ;
un étrier (13) reliant le châssis latéral gauche et le châssis latéral droit sous le coussin de siège ;
un plateau de siège (20 ; 120 ; 220 ; 320) disposé sous le coussin de siège entre le châssis latéral gauche et le châssis latéral droit, et comprenant une partie logeant un module d'airbag (21 ; 121 ; 221 ) ;
un module d'airbag (30; 130; 230; 330) comprenant un airbag (31) logé dans la partie logeant l'airbag, et placé pour être tel que l'airbag est développé et déployé d'un côté inférieur vers un côté supérieur d'un coussin de siège contre un mouvement vers l'avant d'un occupant du véhicule assis dans le siège de véhicule en direction d'un côté avant d'un véhicule à moteur lorsqu'un accident se produit ; et
un élément de fixation conjointe (34) pour fixer le module d'airbag, le plateau de siège et l'étrier ensemble,
dans lequel le module d'airbag, le plateau de siège et l'étrier sont fixés ensemble par l'élément de fixation conjointe, moyennant quoi une pression provoquée à un moment où l'airbag est développé et déployé lorsque l'accident se produit est reçue par le plateau de siège et l'étrier qui sont solidarisés par l'opération de fixation conjointe.

2. Siège de véhicule selon la revendication 1, dans lequel le module d'airbag comprend l'airbag, une partie d'alimentation en gaz (32) afin de générer le gaz de déploiement de l'airbag et alimenter le gaz dans l'airbag lorsque l'accident se produit, un organe de retenue (33) pour loger la partie d'alimentation en gaz, et un boulon de fixation (34) constituant l'élément de fixation conjointe fixée à l'arrêtoir, dans lequel l'organe de retenue, le plateau de siège et l'étrier sont fixés ensemble par la force de fixation du boulon de fixation dans une condition où le boulon de fixation au niveau d'un côté de l'organe de retenue est inséré dans un orifice traversant pénétrant le plateau de siège et l'étrier.

3. Siège de véhicule selon la revendication 2, construit de telle sorte qu'une direction de développement de l'airbag au moment où l'airbag est développé et déployé est approximativement adaptée à une direction d'extension du boulon de fixation.

4. Véhicule à moteur comprenant :
le siège de véhicule (100) selon l'une quelconque des revendications 1 à 3 ; et une ceinture de sécurité pour retenir l'occupant du véhicule assis dans le siège du véhicule, dans lequel le module d'airbag monté sur le siège du véhicule bloque un mouvement de l'occupant du véhicule pour glisser à travers un côté inférieur de la ceinture de sécurité le long d'une surface de siège, en même temps qu'un mouvement vers l'avant d'une partie de taille de l'occupant du véhicule lorsqu'un accident se produit, dans une condition de port de la ceinture de sécurité dans lequel la ceinture de sécurité est portée par l'occupant du véhicule assis dans le siège du véhicule.
